# EUROPÄISCHE PATENTANMELDUNG

(11) **EP 1 182 068 A1**
(43) Veröffentlichungstag der Anmeldung: **27.02.2002**
(21) Anmeldenummer: 01119872.8
(22) Anmeldetag: 17.08.2001
(51) Int. Cl.: B60J 5/04, H01R 13/24

(54) **Türmodul für Kraftfahrzeugtüren**

(30) Priorität: 22.08.2000 DE 10040954
(71) Anmelder: ArvinMeritor GmbH, 63128 Dietzenbach (DE)
(72) Erfinder: Mersch, Gerhard, Dipl.-Ing., 30179 Hannover (DE)
(74) Vertreter: Oppermann, Ewald, Dipl.-Ing.

(57) **Zusammenfassung**

Ein zum Einbau in Kraftfahrzeugtüren bestimmtes Türmodul (1) besitzt einen vorzugsweise plattenförmig aus Kunststoff geformten Systemträger (2), welcher zur Anbringung einer Fensterhebereinheit, vorzugsweise eines Seilfensterhebers, ausgebildet ist. Die elektrische Antriebseinheit (10) der Fensterhebereinheit trägt ein Gehäuse (11) für die Steuerelektronik, das teilweise an der Antriebseinheit (10) abgedichtet befestigt ist und teilweise von dem Systemträger (2) gebildet ist. Bei Anbringung der Antriebseinheit (10) an dem Systemträger (2) wird das Gehäuse (11) unter Abdichtung in einem Arbeitsgang geschlossen, wobei gleichzeitig der elektrische Anschluß der Antriebseinheit (10) ohne weiteres durch Steckkontakte (14) und komplementäre Gegenkontakte (16) erfolgt, die beim Schließen des Gehäuses (11) stromleitend in Eingriff gelangen.

## Beschreibung

Die Erfindung betrifft ein zum Einbau in Kraftfahrzeugtüren bestimmtes Türmodul.

Bei in Kraftfahrzeugtüren eingebauten elektromotorischen Fensterhebern zum Heben und Senken von Fensterscheiben ist die aus einem Getriebemotor, d.h. einem Elektromotor mit einem angeschlossenen Getriebe, bestehende Antriebseinheit in einem feuchtigkeitsdichten Gehäuse angeordnet. Nach einem bekannten Vorschlag (DE 40 19 787 A1) soll im wesentlichen zur Verringerung des Bauteile- und Montageaufwands die zugehörige Steuer- und Regelelektronik in dem Gehäuse der Antriebseinheit angeordnet sein, so daß keine zusätzliche Verkabelung zwischen Antriebseinheit und der Steuer- und Regelschaltung erforderlich ist. Dabei kann die Steuer- und Regelschaltung als Einschubelement ausgebildet sein, das in das Gehäuse der Antriebseinheit einschiebbar und damit abgedichtet verbindbar ist. Beim Einschieben dieses Einschubelements werden die erforderlichen Steckverbindungen für die Stromzuführung zur Antriebseinheit herbeigeführt. Allerdings muß auch bei dieser bekannten Anordnung an dem Gehäuse bzw. an dem Einschubelement eine feuchtigkeitsdichte Kabeldurchführung für eine Strom- und Signalsteckverbindung vorgesehen werden, welche die Verbindung zu einem Bedienungsschalter und zur Stromversorgung herstellt.

Der vorliegenden Erfindung liegt die Aufgabe zugrunde, die Montage der in Kraftfahrzeugtüren für die Hebe- und Senkbewegung von Fensterscheiben benötigten Elemente bei gleichzeitiger Verringerung der Anzahl der dafür einzusetzenden Bauelemente weiter zu vereinfachen.

Diese Aufgabe wird erfindungsgemäß durch die Merkmale des Patentanspruchs 1 gelöst. Vorteilhafte oder zweckmäßige Weiterbildungen gehen aus den Unteransprüchen hervor und sind nachfolgend ebenfalls näher beschrieben.

Das mit der Erfindung vorgeschlagene Türmodul zum Einbau in Kraftfahrzeugtüren ist als Systemträger ausgebildet, an welchem eine Fensterhebereinheit, umfassend Fensterscheibenführungselemente, eine elektrische Antriebseinheit mit daran angebrachtem Gehäuse für die Steuerelektronik und von der Antriebseinheit angetriebene Bewegungsübertragungsmittel zum Heben und Senken der Fensterscheibe, befestigt ist. Dabei ist ein Teil des Gehäuses für die Steuerelektronik von dem Systemträger selbst gebildet. Das erfindungsgemäße Türmodul besteht aus wenigen Teilen, die auf einfache Weise zu einer einbaufertigen und funktionsfähigen Einheit montierbar sind. Wesentlich ist hierbei, daß der Systemträger teilweise das Gehäuse für die Steuerelektronik bildet, welches erst bei Verbindung der Antriebseinheit mit dem Systemträger geschlossen wird.

Wie im Anspruch 2 angegeben ist, wird ein Fensterheber der Bauart Seilheber, bei welchem in Bowdenzughüllen geführte Seilabschnitte die Bewegungsübertragungsmittel bilden, die mit einem Ende an Mitnehmer für die an den als Führungsschienen ausgebildeten Fensterscheibenführungselementen verschiebbar geführte Fensterscheibe angreifen und mit dem anderen Ende auf eine Seiltrommel gelegt sind, welche von der Antriebseinheit wahlweise in beiden Drehrichtungen antreibbar ist, für die Zwecke der Erfindung bevorzugt. Aber auch Fensterheber der Bauart Kabelheber sind geeignet, bei welcher drucksteif geführte Gewindekabel als Bewegungsübertragungsmittel eingesetzt werden, deren Gewindewicklung mit einem von der Antriebseinheit wahlweise in beiden Drehrichtungen antreibbaren Zahnritzel zahnstangenähnlich in Eingriff steht.

In einer einfachen im Anspruch 3 angegebenen Ausführungsform der Erfindung kann der Systemträger plattenförmig ausgebildet sein und die Rückwand des Gehäuses für die Steuerelektronik bilden.

Um das Eindringen von Feuchtigkeit in das die Steuerelektronik aufnehmende Gehäuse zu verhindern, ist gemäß Anspruch 4 vorgesehen, daß zwischen dem an der Antriebseinheit angebrachten Gehäuseteil des Gehäuses für die Steuerelektronik und dem von dem Systemträger gebildeten Gehäuseteil eine bei Vereinigung der beiden Gehäuseteile wirksam werdende um den Gehäuseumfang umlaufende Dichtung angeordnet ist. Hierbei ist die Dichtung zweckmäßig an einem der beiden Gehäuseteile festgelegt und wird von diesem Gehäuseteil gewissermaßen bei der Montage mitgebracht und muß dabei nicht erst eingelegt werden.

Im Verfolg des Erfindungsgedankens ist vorgesehen, daß an dem von dem Systemträger gebildeten Gehäuseteil Steckkontakte für die Strom- und Signalzuführung über daran angeschlossene Kabel angebracht sind, denen komplementäre Gegenkontakte im an der Antriebseinheit angebrachten Gehäuseteil so zugeordnet sind, daß die Steckkontakte und die Gegenkontakte bei Vereinigung der beiden Gehäuseteile stromleitend in Eingriff gelangen. Auf diese Weise wird bei der Montage der Antriebseinheit an dem Systemträger die Antriebseinheit automatisch elektrisch angeschlossen. Da sowohl die Steckkontakte als auch die komplementären Gegenkontakte innerhalb des Gehäuses für die Steuerelektronik vorgesehen sind, liegen die Kontaktpaare innerhalb des durch Abdichtungsmaßnahmen gegen Feuchtigkeitseintritt gesicherten Raums. Entsprechend Anspruch 6 stehen für die Verbindung der beiden Gehäuseteile zwei unterschiedliche Verbindungsarten zur Verfügung, die gleichermaßen lösbar sind. Die beiden Gehäuseteile können nämlich miteinander durch Verrasten oder Verschrauben verbindbar sein, wobei die Verrastung eine besonders schnelle Montage ermöglicht.

Weitere Einzelheiten der Erfindung werden nachfolgend anhand der Ausführungsbeispiele in schematisierter Form darstellenden Zeichnungen näher erläutert. Darin zeigt:
- Fig. 1: eine perspektivische Innenansicht eines Türmoduls in einer ersten Ausführungsform, in welcher die daran zu befestigenden Teile der Antriebseinheit und des Gehäuses für die Steuerelektronik nach Art eines Explosionsbildes dargestellt sind,
- Fig. 2: den abgebrochenen Schnitt durch die Teile des Gehäuses für die Steuerelektronik entsprechend der Schnittverlaufslinie II-II in Fig. 1,
- Fig. 3: eine der Fig. 1 ähnliche perspektivische Innenansicht eines Türmoduls in einer zweiten Ausführungsform, wiederum teilweise in Explosionsbild-Darstellung und
- Fig. 4: den abgebrochenen Schnitt durch die Teile des Gehäuses für die Steuerelektronik entsprechend der Schnittverlaufslinie IV-IV in Fig. 3.

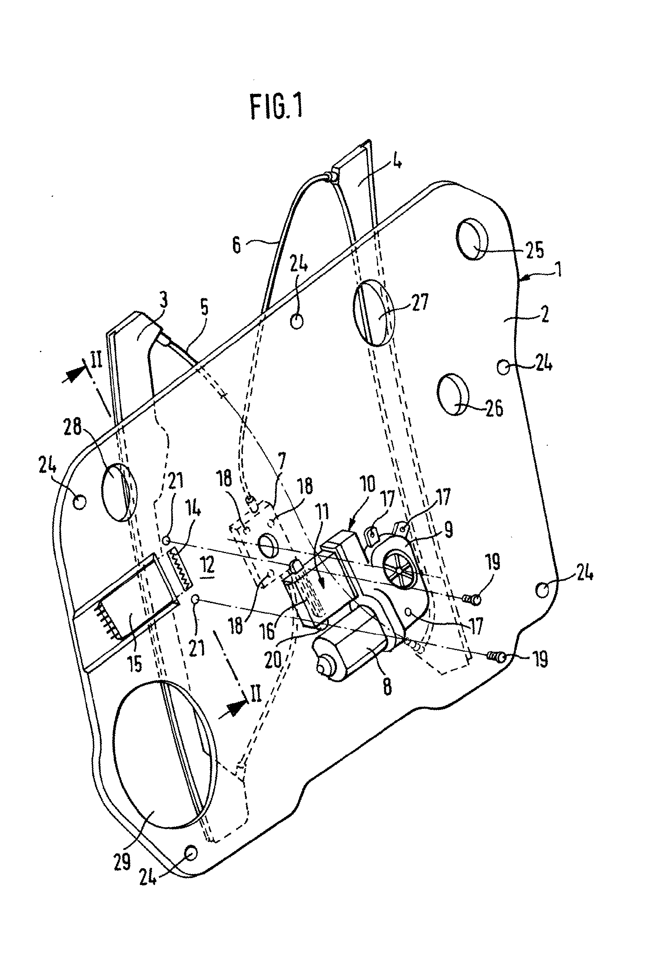

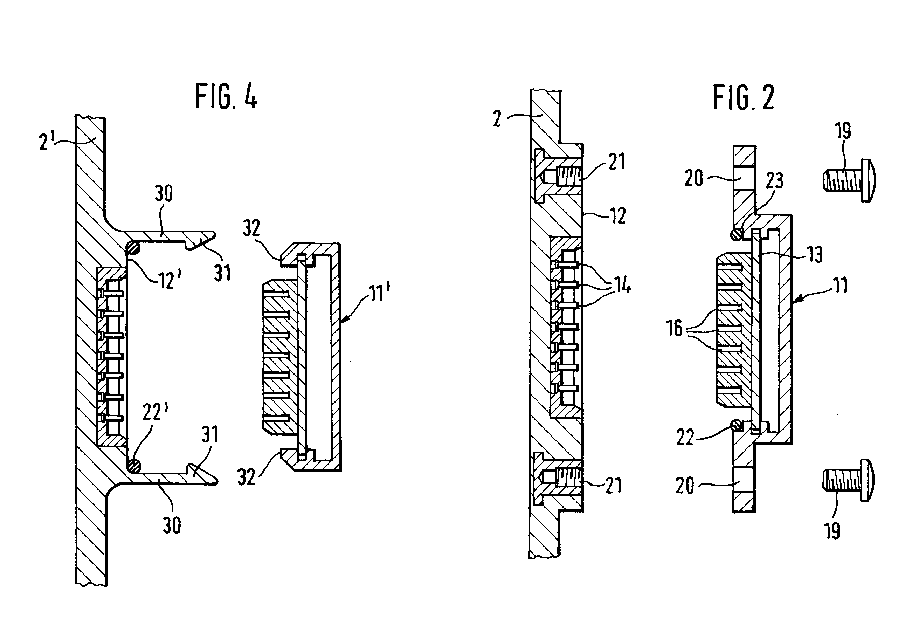

Das in den Figuren 1 und 2 dargestellte Türmodul 1 besitzt einen plattenförmigen Systemträger 2, der für die Montage im Fensterschacht einer Kraftfahrzeugtür (nicht dargestellt) zwischen Türaußenschale und Türinnenschale ausgebildet ist. Der plattenförmige Systemträger 2 ist vorzugsweise aus einem geeigneten Kunststoff, ggf. Recycling-Kunststoff, in Anpassung an etwaige Türwölbungen geformt und kann zur Verbesserung seiner Formbeständigkeit und Belastbarkeit mit Glasfasern armiert sein. Seine Dicke beträgt etwa zwischen 5 und 10 mm.

Von der Fensterhebereinheit sind auf der Außenseite des Türmoduls 1 angebrachte Führungsschienen 3 und 4 als Führungselemente der Fensterscheibe (nicht dargestellt) aus Fig. 1 ersichtlich. Als Bewegungsübertragungsmittel sind Bowdenzüge 5 und 6 des der Bauart Seilheber angehörenden Fensterhebers vorgesehen. Die in den Bowdenzughüllen verschiebbaren Seilabschnitte sind auf eine Seiltrommel gelegt, von der in Fig. 1 nur das auf der Außenseite des Türmoduls 1 befindliche Trommelgehäuse 7 ersichtlich ist. Mit der Seiltrommel durch den Systemträger 2 hindurch steht das Getriebe einer aus Elektromotor 8 und Getriebe 9 bestehenden Antriebseinheit 10 im Antriebseingriff. Die Antriebseinheit 10 befindet sich auf der Innenseite des Türmoduls 1. Derartige Seilheber sind an sich bekannt und bedürfen daher an dieser Stelle keiner näheren Beschreibung.

An der Antriebseinheit 10 ist das Gehäuse 11 für die Steuerelektronik abgedichtet befestigt. Ein Teil dieses Gehäuses 11, nämlich im Ausführungsbeispiel die Rückwand 12, wird von dem Systemträger 2 selbst gebildet, wie am besten aus Fig. 2 hervorgeht. Die Steuerelektronik ist in Fig. 2 nur symbolisch als Platine 13 angedeutet, die im Gehäuse 11 gehalten ist.

In der von dem Systemträger 2 gebildeten Rückwand 12 sind Steckkontakte 14 für die Strom- und Signalzuführung zur Antriebseinheit 10 angebracht. An diese Steckkontakte 14 sind elektrische Leiter angeschlossen, die im gezeichneten Beispiel Bestandteile eines sogenannten Flachbandkabels 15 sind. Den Steckkontakten 14 sind komplementäre Gegenkontakte 16 zugeordnet, welche mit den Bestückungselementen der Platine 13 elektrisch verbunden sind. Im gezeichneten Beispiel sind die Gegenkontakte 16 an der Platine 13 befestigt.

Die Anbringung der Antriebseinheit 10 an dem Systemträger 2 erfolgt durch Schrauben (nicht dargestellt), welche durch Befestigungsbohrungen 17 des Getriebes 9 und durch entsprechende Bohrungen (nicht dargestellt) des Systemträgers 2 hindurch in Gewindebohrungen 18 im Trommelgehäuse 7 eingreifen.

Bei Anbringung der Antriebseinheit 10 wird zugleich das an der Antriebseinheit 10 angebrachte Gehäuseteil des Gehäuses 11 mit der am Systemträger 2 befindlichen Rückwand 12 des Gehäuses 11 vereinigt, wobei die Steckkontakte 14 mit den Gegenkontakten 16 stromleitend in Eingriff gelangen.

Auch die beiden Gehäuseteile des Gehäuses 11 werden bei dem Ausführungsbeispiel gemäß den Figuren 1 und 2 durch Schrauben 19 miteinander verschraubt, die durch Bohrungen 20 im antriebsseitigen Gehäuseteil hindurchgeführt sind und in Gewindemuttern 21 eingreifen, die in den Kunststoff des Systemträgers 2 eingeformt sind.

Zwischen dem an der Antriebseinheit 10 angebrachten Gehäuseteil des Gehäuses 11 und der von dem Systemträger 2 gebildeten Rückwand 12 des Gehäuses 11 ist eine bei Vereinigung der beiden Gehäuseteile wirksam werdende Dichtung 22 vorgesehen. Im Beispiel nach den Figuren 1 und 2 ist die über den Gehäuseumfang umlaufende Dichtung 2 als Runddichtung ausgebildet, die an einer Umfangsstufe 23 des antriebsseitigen Gehäuseteils des Gehäuses 11 festgelegt ist.

In Fig. 1 sind Befestigungsöffnungen 24 im Randbereich des Systemträgers 2 angedeutet, welche der Montage des Türmoduls 1 an der Kraftfahrzeugtür dienen. Die Bezugszeichen 25 bis 29 bezeichnen Montageöffnungen bzw. Lautsprecheraufnahmeöffnungen.

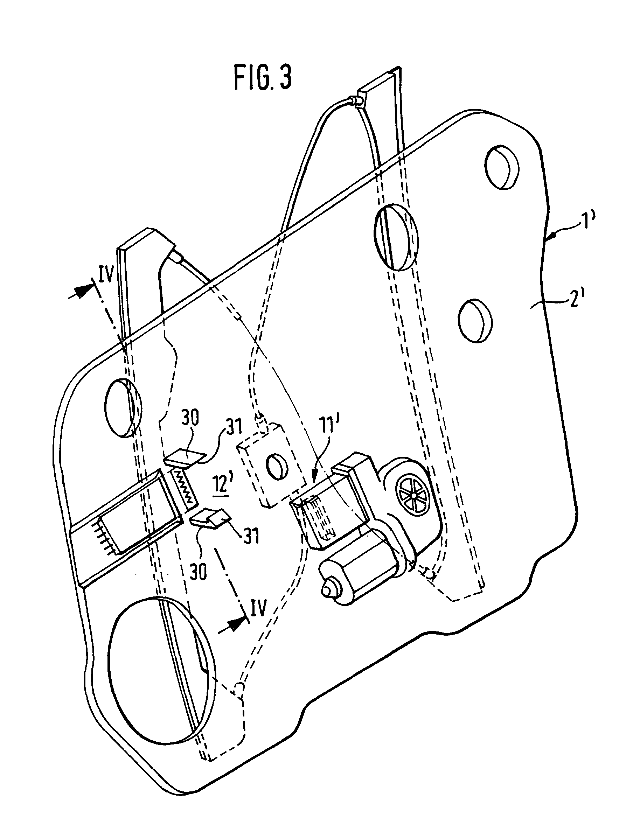

Die in den Figuren 2 und 3 gezeigte zweite Ausführungsform des Türmoduls 1' unterscheidet sich von der bisher beschriebenen ersten Ausführungsform lediglich durch eine unterschiedliche gegenseitige Befestigung der beiden Gehäuseteile des Gehäuses 11' und die Lagezuordnung der Dichtung 22', weshalb auf die Darstellung von Einzelheiten verzichtet wird. Während bei der ersten Ausführungsform die beiden Gehäuseteile durch Schrauben 19 aneinander befestigt werden, übernehmen diese Aufgabe bei der zweiten Ausführungsform im Bereich der Rückwand 12' angebrachte elastisch federnde Rastvorsprünge 30, die mit Rasthaken 31 lösbar mit dem antriebsseitigen Gehäuseteil des Gehäuses 11' eingreifen. Bei der zweiten Ausführungsform ist die ebenfalls als Runddichtung ausgeführte umlaufende Dichtung 22' an der Rückwand 12' festgelegt und kommt bei Vereinigung der beiden Gehäuseteile des Gehäuses 11' mit einer ihr zugekehrten Dichtfläche 32 des antriebsseitigen Gehäuseteils zur dichten Anlage.

Vorgeschlagen wird ein zum Einbau in Kraftfahrzeugtüren bestimmtes Türmodul, das einen vorzugsweise plattenförmig aus Kunststoff geformten Systemträger besitzt, welcher zur Anbringung einer Fensterhebereinheit, vorzugsweise eines Seilfensterhebers, ausgebildet ist. Die elektrische Antriebseinheit der Fensterhebereinheit trägt ein Gehäuse für die Steuerelektronik, das teilweise an der Antriebseinheit abgedichtet befestigt ist und teilweise von dem Systemträger gebildet ist. Bei Anbringung der Antriebseinheit an dem Systemträger wird das Gehäuse unter Abdichtung in einem Arbeitsgang geschlossen, wobei gleichzeitig der elektrische Anschluß der Antriebseinheit ohne weiteres durch Steckkontakte und komplementäre Gegenkontakte erfolgt, die beim Schließen des Gehäuses stromleitend in Eingriff gelangen.

## Patentansprüche

1. Türmodul (1, 1') zum Einbau in Kraftfahrzeugtüren, mit einem Systemträger (2, 2'), an welchem eine Fensterhebereinheit, umfassend Fensterscheibenführungselemente (3, 4), eine elektrische Antriebseinheit (10) mit daran angebrachtem Gehäuse (11, 11') für die Steuerelektronik und von der Antriebseinheit angetriebene Bewegungsübertragungsmittel (5, 6) zum Heben und Senken der Fensterscheibe, befestigt ist, wobei ein Teil (12, 12') des Gehäuses (11, 11') für die Steuerelektronik von dem Systemträger (2, 2') gebildet ist.

2. Türmodul nach Anspruch 1, **dadurch gekennzeichnet, daß** ein Fensterheber der Bauart Seilheber verwendet wird, bei welchem in Bowdenzughüllen geführte Seilabschnitte die Bewegungsübertragungsmittel bilden, die mit einem Ende an Mitnehmer für die an den als Führungsschienen (3, 4) ausgebildeten Fensterscheibenführungselementen verschiebbar geführte Fensterscheibe angreifen und mit dem anderen Ende auf eine Seiltrommel gelegt sind, welche von der Antriebseinheit (10) wahlweise in beiden Drehrichtungen antreibbar ist.

3. Türmodul nach Anspruch 1 oder 2, **dadurch gekennzeichnet, daß** der Systemträger (2, 2') plattenförmig ausgebildet ist und die Rückwand (12, 12') des Gehäuses (11, 11') für die Steuerelektronik bildet.

4. Türmodul nach einem der vorstehenden Ansprüche, **dadurch gekennzeichnet, daß** zwischen dem an der Antriebseinheit (10) angebrachten Gehäuseteil des Gehäuses (11, 11') für die Steuerelektronik und dem von dem Systemträger (2, 2') gebildeten Gehäuseteil (12, 12') eine bei Vereinigung der beiden Gehäuseteile wirksam werdende, um den Gehäuseumfang umlaufende Dichtung (22, 22') angeordnet ist.

5. Türmodul nach einem der vorstehenden Ansprüche, **dadurch gekennzeichnet, daß** an dem von dem Systemträger (2, 2') gebildeten Gehäuseteil Steckkontakte (14) für die Strom- und Signalzuführung über daran angeschlossene Kabel (15) angebracht sind, denen komplementäre Gegenkontakte (16) im an der Antriebseinheit (10) angebrachten Gehäuseteil so zugeordnet sind, daß die Steckkontakte (14) und die Gegenkontakte (16) bei Vereinigung der beiden Gehäuseteile stromleitend in Eingriff gelangen.

6. Türmodul nach einem der vorstehenden Ansprüche, **dadurch gekennzeichnet, daß** die beiden Gehäuseteile miteinander durch Verrasten oder Verschrauben verbindbar sind.
